# EUROPEAN PATENT APPLICATION

(11) **EP 2 455 902 A1**
(43) Date of publication of application: **23.05.2012**
(21) Application number: 11185237.2
(22) Date of filing: 14.10.2011
(51) Int. Cl.: G06Q 10/10

(54) **Achieving lossless data streaming in a scan based industrial process control system**

(30) Priority: 14.10.2010 US 905075
(71) Applicant: Invensys Systems, Inc., Foxboro, MA 02035 (US)
(72) Inventor: Ivanov, Dimitre Kirilov, Rancho Santa Margarita, CA California 92688 (US); Todorov, Ivan Atanassov, Tustin, CA California 92782 (US); Victor, Hendrik Johannes, Rancho Santa Margarita, CA California 92688 (US); Xi, Xu, Irvine, CA California 92618 (US)
(74) Representative: Friese, Martin

(57) **Abstract**

A system for lossless sequence of events data streaming in a scan based process control system is provided. The system comprises a digital interface component, the digital interface component configured to receive a plurality of sequence of events data collected during one scan period, to produce a sequence of events data buffer comprising a plurality of sequence of events data, and to make the sequence of events data buffer available to at least one system component. The digital interface component comprises a storage component, the storage component configured to store a sequence of events data buffer. The system further comprises a processing component that accesses the sequence of events data from the storage component and processes the sequence of events data.

## Description

### BACKGROUND

Significant advances in industrial process control technology have improved factory and plant operation. Improvements to process control technology have enabled larger and more complex industrial processes to be controlled via programmed control processors. Control processors execute control programs that read process status variables, execute control algorithms based upon the status variable data and desired set point information to render output values for the control points in industrial processes. The process status and control information generated by the process controller is stored within process control databases and/or in field devices within the process control network. Data access servers collect data from the databases and field devices, via e.g. Programmable Logic Controllers (PLC) or Remote Terminal Units (RTU) and make the data available to higher-level supervisory and monitoring client applications. Supervisory and monitoring process control systems enable, for instance, the verification of proper execution and the configuration of set points for the controlled processes. Supervisory and monitoring oversight is provided by humans via a Human Machine Interface (HMI) and/or higher-level control applications in a multilevel process control network. Many of the process control systems are scan based, i.e. the process control logic is executed periodically, at scan times.

### SUMMARY

In an embodiment, a system for lossless sequence of events data streaming in a scan based process control system is disclosed. The system comprises a digital interface component, the digital interface component configured to receive a plurality of sequence of events data collected during one scan period, to produce a sequence of events data buffer comprising a plurality of sequence of events data, and to make the sequence of events data buffer available to at least one system component. The digital interface component comprises a storage component, the storage component configured to store a sequence of events data buffer. The system further comprises a processing component that accesses the sequence of events data form the storage component and processes the sequence of events data.

In an embodiment, a method for lossless data streaming in a scan based process control system is provided. The method comprises receiving at least one data aggregate, wherein each data aggregate comprises a value, time stamp and quality, producing a buffer comprising at least one data aggregate, storing the buffer, producing a custom structure comprising the buffer, transporting the custom structure, and clearing the buffer.

In an embodiment, a method for streaming data in a scan based process control system is provided. The method comprises receiving at least one data aggregate, wherein each data aggregate comprises a value, time stamp and quality, producing a buffer comprising at least one data aggregate, storing the buffer, producing a custom structure comprising the buffer, and transporting the custom structure.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.

FIG. 1 is a block diagram of a process control architecture according to an embodiment of the disclosure.

FIG. 2 is a block diagram of a process control system according to an embodiment of the disclosure.

FIG. 3 is a block diagram of a sequence of events data processing system in a process control system according to an embodiment of the disclosure.

FIG. 4 is a flowchart of a data streaming method in a process control system according to an embodiment of the disclosure.

FIG. 5 illustrates a computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

The processing rate of scan based systems is typically not synchronized to the fast influx rate of event based field data, or Sequence of Events (SOE) data. Since SOE data are captured by scan based systems at scan times only and not during the entire scan period, data arriving between scan times are lost. This phenomenon is known as data folding. Some process control systems may store SOE data in an archiving device, or a historization device, to allow retrieval and processing of event based data by client applications. The present process buffers the data arriving between scan times in high speed RAM or a similar performance memory device for preventing the loss of data between a scan.

The present disclosure teaches a system and method for combining event driven processing with scan based processing to enable lossless storage, transportation and processing of event based SOE data in scan based automation process control systems. The system allows for high speed lossless data capture by scan based processing systems or applications and subsequent data analysis to allow, for instance, insights into process behavior, discovery of anomalous conditions, early prediction of potential abnormal events and alarm detection. Prior systems may receive a plurality of SOE data collected during a scan period from a plurality of devices and may produce a data record comprising the SOE data at scan time. Devices may comprise, for example, valves, sensors, contactors, transducers, etc., which may provide discrete inputs or analog inputs. Any SOE data generated during the scan period may not be captured and may therefore be lost. The system taught by the present disclosure may receive a plurality of SOE data collected during a scan period from a plurality of devices and may accumulate the SOE data to produce a custom structure comprising at least one SOE data buffer. In an embodiment, each SOE data buffer may receive data from one device. SOE data accumulation between scan times may be optional and performed upon client request. In an embodiment, the SOE data buffer comprised in the custom structure may comprise at least one SOE data accumulated at scan time and between scan times. In another embodiment, the SOE data buffer comprised in the custom structure may comprise at least one SOE data obtained at scan time and, upon client request, the SOE data buffer may further comprise at least one SOE data accumulated between scan times. Therefore, the system may be compatible with existing and legacy scan based systems. The system may comprise a method for transporting the custom structure comprising the SOE data buffer to a plurality of client applications for immediate processing, without the need for the clients to perform a time consuming retrieval of unfolded SOE data from a historization device. The system may comprise a method for clearing an SOE data buffer to allow the SOE data buffer to be overwritten.

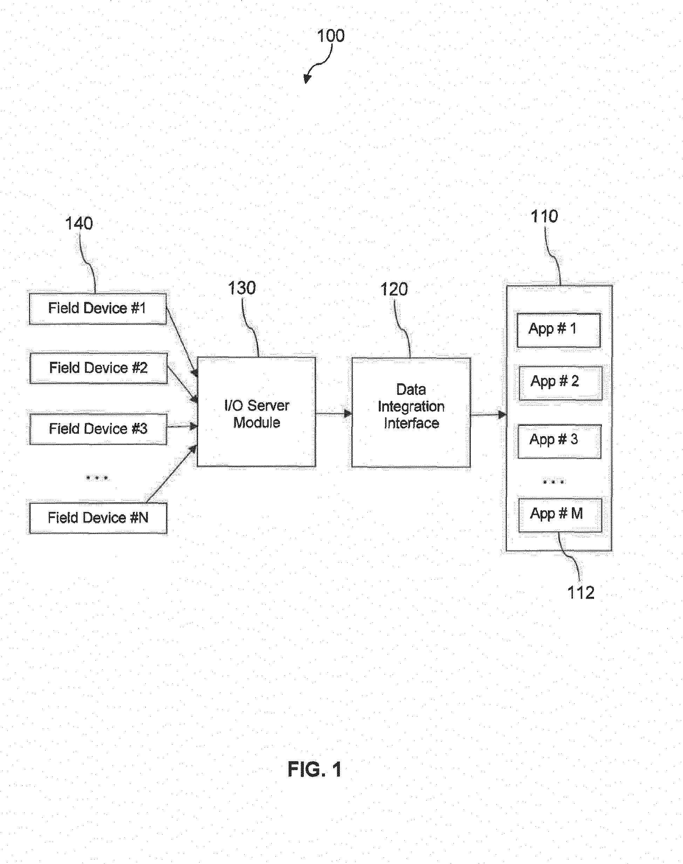

FIG. 1 shows an embodiment of a Process Control Architecture 100 comprising a plurality of Field Devices 140, an I/O Server Module 130, a Data Integration Interface 120, and a Client Applications Module 110. The Client Applications Module 110 may comprise a plurality of Client Applications 112. In an embodiment, the Field Devices 140 may comprise a variety of devices such as, for example, valves, sensors, contactors, transducers, etc. which may provide discrete inputs or analog inputs. Some of the Field Devices 140 may further use control logic or software to allow, for example, controlling a device, performing diagnostics, generating a failure report and collecting status and/or measurement data. Data generated by the plurality of Field Devices 140 may be collected, integrated, pre-processed and sent to the Client Applications Module 110 for higher level processing.

The I/O Server Module 130 may comprise a plurality of devices, such as Programmable Logic Controllers (PLC) and/or at least one Remote Terminal Units (RTU), coupled to the actual machinery and/or devices that constitute the industrial system being monitored and controlled. The input and output systems of the PLCs and/or RTUs may be physically connected to the plurality of Field Devices 140 to receive a plurality of field data such as alarm states, temperature, configuration parameters, etc.

The Data Integration Interface 120 is designed to couple between the Field Devices 140 and the Client Applications Module 110 to allow services such as, for example, device integration, diagnostics, and remote configuration. In an embodiment, the Data Integration Interface 120 may poll the I/O Server Module 130 at scan times. In an embodiment, the Data Integration Interface 120 may receive a plurality of SOE data collected during a scan period. In an embodiment, the SOE data may comprise value, time stamp and quality (VTQ), and the SOE data may be referred to herein, for brevity, as VTQ data. In some contexts herein, the VTQ data may be referred to as data aggregates, wherein each data aggregate may comprise a value, a time stamp and a quality. In an embodiment, the format of the VTQ data may be in compliance with the Object Linking and Embedding (OLE) For Process Control (OPC) standard, which is incorporated herein by reference. In an embodiment, the Data Integration Interface 120 may comprise a data access server, and in another embodiment, the Data Integration Interface 120 may comprise a data access server providing data in compliance with the OPC standard.

The Client Applications Module 110 may receive a plurality of SOE data. In an embodiment, the Client Applications Module 110 may communicate with the Data Integration Interface 120 in compliance with the OPC standard. The plurality of Client Applications 112 may subscribe to receiving SOE data buffers and may extract a plurality of SOE data from a plurality of SOE data buffers for client specific processing such as, e.g. supervisory and/or monitoring applications. In an embodiment, the SOE data may comprise a plurality of VTQ data. The parameter 'value' of a VTQ data may indicate the measured value, the parameter 'time' of the VTQ data may be associated with the time stamp when the value was collected, and the parameter 'quality' of the VTQ data may assign a qualitative score to the value of the VTQ data. For example, a VTQ data may comprise a value '10', a time stamp '2010-06-10 10:10:15.000' and a quality 'GOOD'. In a further embodiment, the format of the VTQ data may be in compliance with the OPC standard. A Client Application 112 may extract SOE data from the received SOE data to perform, for instance, Human-Machine Interface (HMI) functions, remote process control, data historization, database creation and/or maintenance, report generation, etc.

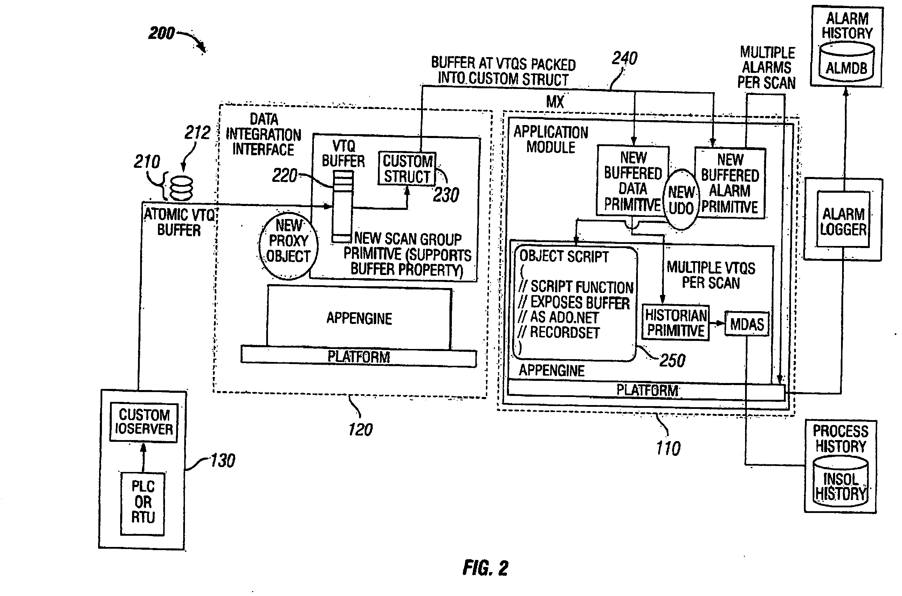

FIG. 2 illustrates an embodiment of a Process Control System 200, which may comprise the I/O Server Module 130, the Data Integration Interface 120 and the Client Applications Module 110. The Process Control System 200 may further comprise at least one Atomic VTQ Data Buffer 210 comprising one or more VTQ Data 212, at least one VTQ Data Buffer 220 comprising one or more VTQ Data 212, a Custom Structure 230 comprising the at least one VTQ Data Buffer 220, a Messaging System 240 for transporting a Custom Structure 230, and a Scripting Method 250 to extract VTQ Data 212 from the Custom Structure 230. The at least one VTQ Data Buffer 220 may comprise more than one VTQ Data 212 associated with a scan period. In an embodiment, each VTQ Data Buffer 220 comprises at least one VTQ Data 212 received from one Field Device 140.

In an embodiment, the Data Integration Interface 120 may poll the I/O Server Module 130 at scan times, and the I/O Server Module 130 may send at least one Atomic VTQ Data Buffer 210 comprising at least one VTQ Data 212. In an embodiment, the I/O Server Module 130 may receive from a plurality of Field Devices 140 a plurality of VTQ Data 212 on an event driven basis and may send at least one Atomic VTQ Data Buffer 210 comprising at least one VTQ Data 212. The Data Integration Interface 120 may receive at least one Atomic VTQ Data Buffer 210 and may extract at least one VTQ Data 212 from the Atomic VTQ Data Buffer 210. The Data Integration Interface 120 may accumulate the VTQ Data 212 to the VTQ Data 212 comprised in at least one VTQ Data Buffer 220. In an embodiment, each VTQ Data Buffer 220 may comprise VTQ Data 212 associated with one data tag. Data Integration Interface 120 may then store the at least one VTQ Data Buffer 220 and make at least one VTQ Data Buffer 220 available to a plurality of components in the Process Control System 200, for example one or more of the Client Applications 112. In a second embodiment, storing the at least one VTQ Data Buffer 220 may further comprise sorting the plurality of VTQ Data 212 comprised in each VTQ Data Buffer 220 based on the arrival times associated with the VTQ Data 212 comprising the VTQ Data Buffer 220. In a third embodiment, storing the at least one VTQ Data Buffer 220 may further comprise sorting the plurality of VTQ Data 212 comprised in each VTQ Data Buffer 220 based on the values of the time stamps associated with the VTQ Data 212 comprising the VTQ Data Buffer 220. In an embodiment, the at least one VTQ Data Buffer 220 may be made available to a plurality of components in the Process Control System 200 once every scan period. In an embodiment, a VTQ Data Buffer 220 comprising VTQ Data 212 associated with a scan period may be cleared and then overwritten in the next scan period by a VTQ Data Buffer 220 comprising VTQ Data 212 associated with the next scan period. In a second embodiment, clearing and overwriting a VTQ Data Buffer 220 may be done in part as per consumer request.

Alternatively, a hybrid method of clearing the VTQ Data Buffer 220 may be deployed that overwrites the VTQ Data Buffer 220 on consumer request except that if a threshold of maximum memory consumed by VTQ Data Buffers 220 is exceeded, some of the VTQ Data Buffers 220, for example the oldest VTQ Data Buffers 220, may be deleted. For example, if a threshold of memory consumed by VTQ Data Buffers 220 is exceeded, the oldest 5% VTQ Data Buffers 220 may be deleted and/or marked to be overwritten by new VTQ Data Buffers 220. Other percentages such as the oldest 10% or 20% or more of the VTQ Data Buffers 220 may be deleted and/or marked to be overwritten by new VTQ Data Buffers 220 when the threshold of memory consumed by VTQ Data Buffers 220 is exceeded. If the consumer processes, for example client applications 112, request that VTQ Data Buffers 220 be overwritten or marked for overwriting fast enough, the threshold may not be reached and it may not happen that the 5%, 10%, 20% of the VTQ Data Buffers 220 be deleted based on aging. The present process clears the buffer at the end of the scan cycle.

The Data Integration Interface 120 may produce a Custom Structure 230 comprising at least one VTQ Data Buffer 220 and may send the Custom Structure 230 to the Client Applications Module 110 via the Messaging System 240. The Client Applications Module 110 may receive a Custom Structure 230. A Client Application 112 may extract at least one VTQ Data 212 comprised in the Custom Structure 230 using the Scripting Method 250. The Client Application 112 may store at least one VTQ Data 212 for processing at a later stage or may process at least one VTQ Data 212 for the purpose of, for example, alarm historization, alarm logging and/or to data historization.

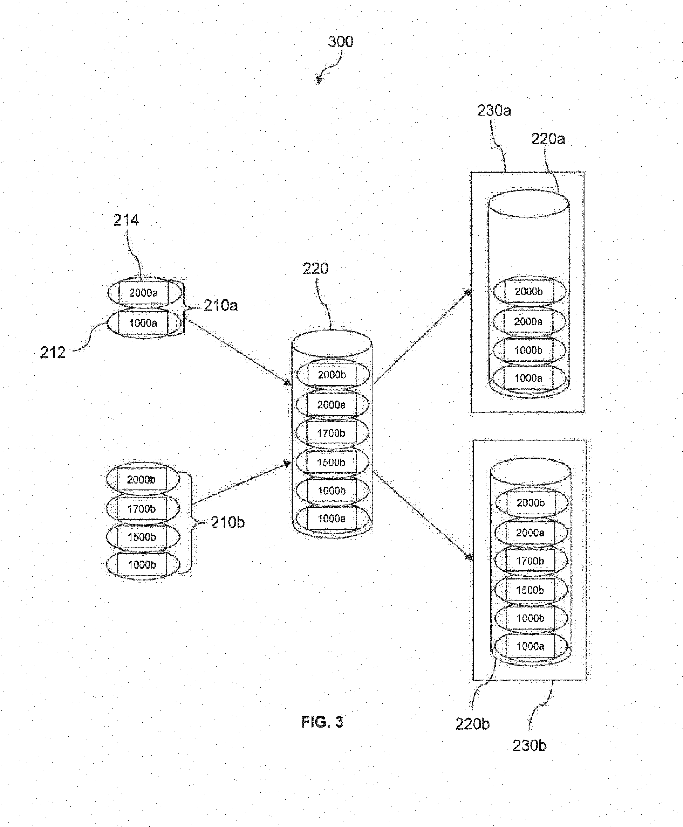

FIG. 3 illustrates one embodiment of a VTQ Data Processing System 300. The VTQ Data Processing System 300 may comprise at least one Atomic VTQ Data Buffer 210 comprising a plurality of VTQ Data 212 collected during one scan period, each associated with a Time Stamp 214. The VTQ Data Processing System 300 may further comprise the Custom Structure 230 comprising at least one VTQ Data Buffer 220 comprising at least one VTQ Data 212. Although, for the sake of clarity, only one VTQ Data 212 and only one Time Stamp 214 are shown, it should be understood that all Atomic VTQ Data Buffers 210 and all VTQ Data Buffers 220 in the drawing comprise VTQ Data 212, and that each VTQ Data 212 in the drawing is associated with a Time Stamp 214.

In an embodiment, the VTQ Data Processing System 300 may extract at least one VTQ Data 212 comprised in at least one Atomic VTQ Data Buffer 210 to produce the at least one VTQ Data Buffer 220. In an embodiment, the VTQ Data 212 comprised in a VTQ Data Buffer 220 are associated with one data tag. In a further embodiment, producing the VTQ Data Buffer 220 may comprise ordering the VTQ Data 212 comprising the VTQ Data Buffer 220 according to the Time Stamps 214 associated with the VTQ Data 212 comprising the VTQ Data Buffer 220. The VTQ Data Processing System 300 may then produce at least one Custom Structure 230 comprising a VTQ Data Buffer 220 comprising one or more VTQ Data 212, and may send the at least one Custom Structure 230.

In an example, a process control system may scan every 1000 arbitrary time units, with start scan time at 1000 arbitrary time units. In the example, an Atomic VTQ Data Buffer 210a may be received, the Atomic VTQ Data Buffer 210a comprising two VTQ Data 212 associated with Time Stamps 214 '1000a' and '2000a', respectively, wherein '1000' and '2000' exemplify 1000 and 2000 arbitrary time units respectively, and wherein 'a' labels the Atomic VTQ Data Buffer 210a. In the example, an Atomic VTQ Data Buffer 210b may be received, the Atomic VTQ Data Buffer 210b comprising four VTQ Data 212 associated with Time Stamps 214 '1000b', '1500b', '1700b', and '2000b', respectively, wherein '1000', '1500', '1700', and '2000' exemplify 1000, 1500, 1700, and 2000 arbitrary time units respectively, and wherein 'b' labels the Atomic VTQ Data Buffer 210b. VTQ Data 212 associated with Time Stamps 214 '1000a', '2000a', '1000b', and '2000b' are collected at scan times, and VTQ Data 212 with associated Time Stamps 214 '1500b', '1700b' are collected between scan times.

In the example, the VTQ Data Processing System 300 may extract the VTQ Data 212 from Atomic VTQ Data Buffer 210a and from Atomic VTQ Data Buffer 21 0b to produce VTQ Data Buffer 220 comprising a plurality of VTQ Data 212 associated with Time Stamps 214 '1000a', '1000b', '1500b', '1700b', '2000a', and '2000b'. In the example, the VTQ Data Processing System 300 may send a Custom Structure 230a comprising a VTQ Data Buffer 220a comprising a plurality of VTQ Data 212 associated with Time Stamps 214 '1000a', '1000b', '2000a', and '2000b'. The VTQ Data Processing System 300 may further send a Custom Structure 230b comprising a VTQ Data Buffer 220b comprising a plurality of VTQ Data 212 associated with Time Stamps 214 '1000a', '1000b', '1500b', '1700b', '2000a', and '2000b'.

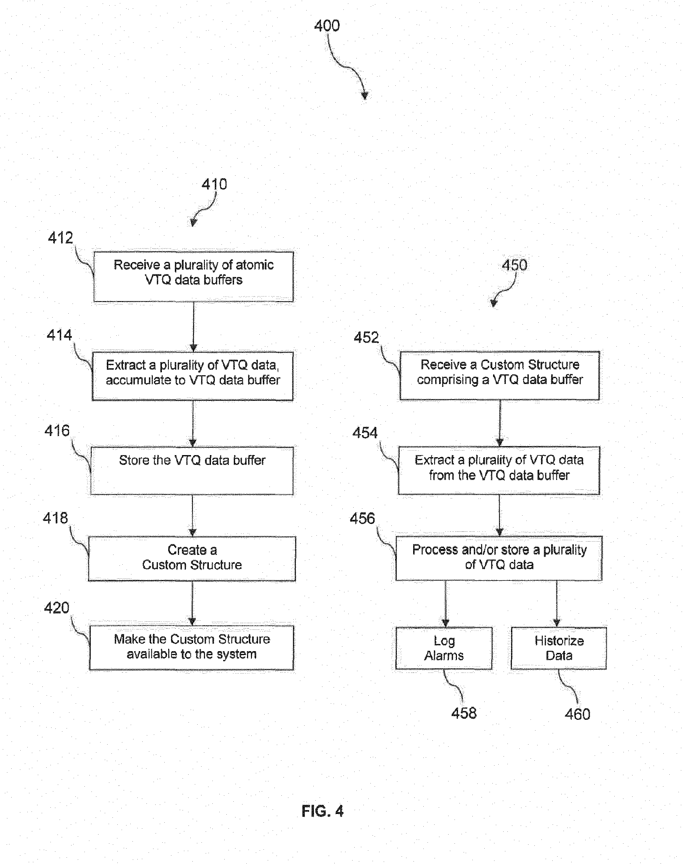

FIG. 4 illustrates one embodiment of a Data Streaming Method 400, which may be used to acquire and process SOE data. The Data Streaming Method 400 may comprise a Data Acquisition Method 410 and a Data Processing Method 450. The Data Acquisition Method 410 may be implemented at the Data Integration Interface 120, and the Data Processing Method 450 may be implemented at the Client Applications Module 110. The Data Acquisition Method 410 may begin at block 412, where the Data Acquisition Method 410 may receive at least one Atomic VTQ Data Buffer 210. The Data Acquisition Method 410 may continue to block 414 and may extract a plurality of VTQ Data 212 comprised in the at least one received Atomic VTQ Data Buffer 210. The Data Acquisition Method 410 may accumulate the extracted VTQ Data 212 to at least one VTQ Data Buffer 220. Next, at block 416, the Data Acquisition Method 410 may store the at least one VTQ Data Buffer 220. In one embodiment, producing the at least one VTQ Data Buffer 220 further comprises sorting the plurality of extracted VTQ Data 212 based on the arrival times associated with the VTQ Data 212 comprising the at least one VTQ Data Buffer 220. In another embodiment, producing the at least one VTQ Data Buffer 220 further comprises sorting the plurality of extracted VTQ Data 212 based on the Time Stamps 214 associated with the VTQ Data 212 comprising the at least one VTQ Data Buffer 220. At block 418, the Data Acquisition Method 410 may produce a Custom Structure 230 comprising at least one VTQ Data Buffer 220. Next, at block 420, the Custom Structure 230 is made available to the Client Applications Module 110, and the Data Acquisition Method 410 may end.

The Data Processing Method 450 may begin at block 452, where the Data Processing Method 450 may receive a Custom Structure 230 comprising a VTQ Data Buffer 220. Next, at block 454, the Data Processing Method 450 may extract at least one VTQ Data 212 comprised in the Custom Structure 230. At block 456, the Data Processing Method 450 may process and/or store the at least one VTQ Data 212. In one embodiment, the Data Processing Method 450 may proceed to block 458, where the Data Processing Method 450 may log alarms, and the Data Processing Method 450 may end. In another embodiment, the Data Processing Method 450 may proceed to block 460, where the Data Processing Method 450 may historize data, and the Data Processing Method 450 may end.

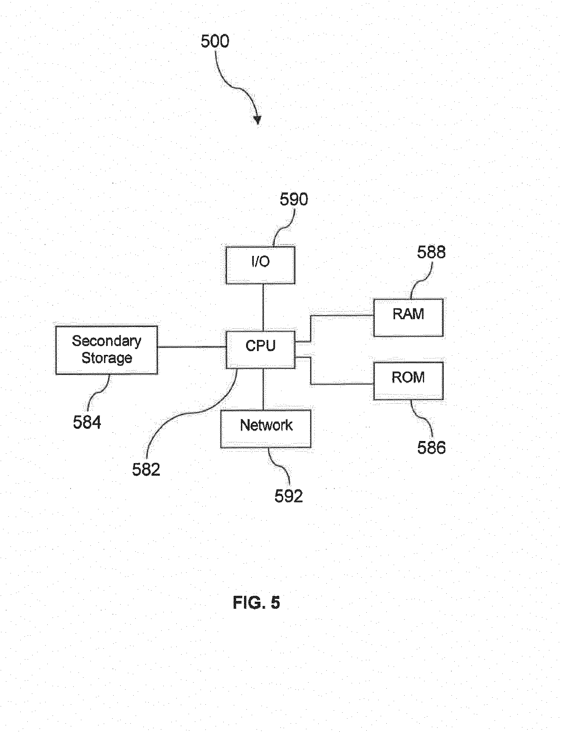

FIG. 5 illustrates a computer system 500 suitable for implementing one or more embodiments disclosed herein. The computer system 500 includes a processor 582 (which may be referred to as a central processor unit or CPU) that is in communication with memory devices including secondary storage 584, read only memory (ROM) 586, random access memory (RAM) 588, input/output (I/O) devices 590, and network connectivity devices 592. The processor 582 may be implemented as one or more CPU chips.

It is understood that by programming and/or loading executable instructions onto the computer system 500, at least one of the CPU 582, the RAM 588, and the ROM 586 are changed, transforming the computer system 500 in part into a particular machine or apparatus having the novel functionality taught by the present disclosure. It is fundamental to the electrical engineering and software engineering arts that functionality that can be implemented by loading executable software into a computer can be converted to a hardware implementation by well known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

The secondary storage 584 is typically comprised of one or more disk drives or tape drives and is used for non-volatile storage of data and as an over-flow data storage device if RAM 588 is not large enough to hold all working data. Secondary storage 584 may be used to store programs which are loaded into RAM 588 when such programs are selected for execution. The ROM 586 is used to store instructions and perhaps data which are read during program execution. ROM 586 is a non-volatile memory device which typically has a small memory capacity relative to the larger memory capacity of secondary storage 584. The RAM 588 is used to store volatile data and perhaps to store instructions. Access to both ROM 586 and RAM 588 is typically faster than to secondary storage 584. The secondary storage 584, the RAM 588, and/or the ROM 586 may be referred to in some contexts as non-transitory storage and/or non-transitory computer readable media.

I/O devices 590 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 592 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards such as code division multiple access (CDMA), global system for mobile communications (GSM), long-term evolution (LTE), worldwide interoperability for microwave access (WiMAX), and/or other air interface protocol radio transceiver cards, and other well-known network devices. These network connectivity devices 592 may enable the processor 582 to communicate with the Internet or one or more intranets. With such a network connection, it is contemplated that the processor 582 might receive information from the network, or might output information to the network in the course of performing the above-described method steps. Such information, which is often represented as a sequence of instructions to be executed using processor 582, may be received from and outputted to the network, for example, in the form of a computer data signal embodied in a carrier wave.

Such information, which may include data or instructions to be executed using processor 582 for example, may be received from and outputted to the network, for example, in the form of a computer data baseband signal or signal embodied in a carrier wave. The baseband signal or signal embodied in the carrier wave generated by the network connectivity devices 592 may propagate in or on the surface of electrical conductors, in coaxial cables, in waveguides, in an optical conduit, for example an optical fiber, or in the air or free space. The information contained in the baseband signal or signal embedded in the carrier wave may be ordered according to different sequences, as may be desirable for either processing or generating the information or transmitting or receiving the information. The baseband signal or signal embedded in the carrier wave, or other types of signals currently used or hereafter developed, may be generated according to several methods well known to one skilled in the art. The baseband signal and/or signal embedded in the carrier wave may be referred to in some contexts as a transitory signal.

The processor 582 executes instructions, codes, computer programs, scripts which it accesses from hard disk, floppy disk, optical disk (these various disk based systems may all be considered secondary storage 584), ROM 586, RAM 588, or the network connectivity devices 592. While only one processor 582 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 584, for example, hard drives, floppy disks, optical disks, and/or other device, the ROM 586, and/or the RAM 588 may be referred to in some contexts as non-transitory instructions and/or non-transitory information.

In an embodiment, the computer system 500 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 500 to provide the functionality of a number of servers that is not directly bound to the number of computers in the computer system 500. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third party provider. Some cloud computing environments may comprise cloud computing resources owned and operated by the enterprise as well as cloud computing resources hired and/or leased from a third party provider.

In an embodiment, some or all of the functionality disclosed above may be provided as a computer program product. The computer program product may comprise one or more computer readable storage medium having computer usable program code embodied therein implementing the functionality disclosed above. The computer program product may comprise data, data structures, files, executable instructions, and other information. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 500, at least portions of the contents of the computer program product to the secondary storage 584, to the ROM 586, to the RAM 588, and/or to other non-volatile memory and volatile memory of the computer system 500. The processor 582 may process the executable instructions and/or data in part by directly accessing the computer program product, for example by reading from a CD-ROM disk inserted into a disk drive peripheral of the computer system 500. The computer program product may comprise instructions that promote the loading and/or copying of data, data structures, files, and/or executable instructions to the secondary storage 584, to the ROM 586, to the RAM 588, and/or to other non-volatile memory and volatile memory of the computer system 500.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

Accordingly the invention also relates to a system for lossless sequence of events data streaming in a scan based process control system. The system preferably comprises a digital interface component, wherein the digital interface component preferably is configured to receive a plurality of sequence of events data collected during one scan period and/or to produce a sequence of events data buffer comprising a plurality of sequence of events data and/or to make the sequence of events data buffer available to at least one system component. The digital interface component preferably comprises a storage component, wherein the storage component is preferably configured to store a sequence of events data buffer. The system further preferably comprises a processing component that accesses the sequence of events data from the storage component and processes the sequence of events data.

## Claims

1. System for lossless sequence of events data streaming in a scan based process control system, comprising:
a digital interface component, the digital interface component configured to receive
a plurality of sequence of events data collected during one scan period, to produce a sequence of events data buffer comprising a plurality of sequence of events data, and to make the sequence of events data buffer available to at least one system component;
a storage component, the storage component configured to store a sequence of
events data buffer, wherein the storage component is a component within the digital interface component; and
a processing component that accesses the sequence of events data from the
storage component and processes the sequence of events data.

2. System according to claim 1, wherein the digital interface component comprises a data access server.

3. System according to any of the preceding claims, wherein the digital interface component receives at least one sequence of events data from at least one Programmable Logic Controller (PLC) and/or at least one Remote Terminal Units (RTU).

4. System according to any of the preceding claims , wherein the digital interface component is further configured to send a custom structure comprising a sequence of events data buffer to at least one system component, and/or wherein the sequence of events data comprises a value, time stamp and quality (VTQ).

5. System according to any of the preceding claims, wherein the digital interface component is further configured to order the sequence of events data.

6. System according to claim 5, wherein ordering the sequence of events data buffer is based on the arrival times associated with the sequence of events data and/or based on the time stamps associated with the sequence of events data.

7. System according to any of the preceding claims, wherein a plurality of client applications are configured to receive at least one sequence of events data buffer.

8. Method for lossless data streaming in a scan based process control system, comprising:
receiving at least one data aggregate, wherein each data aggregate comprises a
value, time stamp and quality;
producing a buffer comprising at least one data aggregate;
storing the buffer;
producing a custom structure comprising the buffer;
transporting the custom structure; and
clearing the buffer.

9. Method according to claim 8, wherein receiving at least one data aggregate comprises receiving at least one data aggregate collected during one scan period from at least one Programmable Logic Controller (PLC) and/or at least one Remote Terminal Unit (RTU).

10. Method according to any of claims 8 to 9, wherein the custom structure is transported to at least one system component.

11. Method according to any of claims 8 to 10, wherein storing a buffer further comprises ordering the data aggregates comprised in the buffer based on the values of the arrival times associated with the data aggregates comprised in the buffer and/or the time stamps associated with the data aggregates comprised in the buffer.

12. Method according to any of claims 8 to 11, further comprising associating one buffer with one scan period.

13. Method for streaming data in a scan based process control system, comprising:
subscribing to at least one buffer, the buffer comprising at least one data aggregate,
wherein each data aggregate comprises a value, time stamp and quality;
receiving at least one buffer;
storing at least one data aggregate;
extracting at least one data aggregate comprised in a buffer; and
processing at least one data aggregate.

14. Method according to claim 13, wherein the at least one buffer is comprised in an ADO.NET Record Set.

15. Method according to claim 13 or 14, further comprising scripting to access at least one data aggregate comprised in a buffer, and/or
further comprising historizing data by extracting at least one data aggregate comprised in a buffer and processing at least one data aggregate, and/or
further comprising logging alarms by extracting at least one data aggregate comprised in a buffer and processing at least one data aggregate.
